# FASCICULE DE BREVET EUROPEEN

(11) **EP 0 733 525 B1**
(45) Date de publication et mention de la délivrance du brevet: **18.07.2001**
(21) Numéro de dépôt: 96400557.3
(22) Date de dépôt: 18.03.1996
(51) Int. Cl.: B60R 25/04

(54) **Antivol électrique perfectionné, notamment pour un véhicule automobile**
Verbesserte Diebstahlsicherung, insbesondere für ein Kraftfahrzeug
Improved electric anti-theft device, especially for a motor vehicle

(30) Priorité: 21.03.1995 FR 9503396
(43) Date de publication de la demande: 25.09.1996
(73) Titulaire: VALEO SECURITE HABITACLE, 94000 Créteil (FR)
(72) Inventeur: Peyre, Jean, 78800 Houilles (FR); Humbert, Arnaud, 94000 Créteil (FR); Demouy, Olivier, 75012 Paris (FR)
(74) Mandataire: Kohn, Philippe

(56) Documents cités:
- FR-A- 2 454 503
- US-A- 3 735 833
- ATZ AUTOMOBILTECHNISCHE ZEITSCHRIFT, vol. 96, no. 5, STUTTGART DE, pages 321-323,330, XP000442154 CHRISTIAN SCHNEIDER; ULRISCH SCHREY: "Ein Fahrzeugsystem ohne mechanischen Schlüssel"

## Description

La présente invention concerne un antivol électrique, notamment pour un véhicule automobile.

Il a déjà été proposé des dispositifs permettant de déverrouiller à distance et donc sans contact ni électrique, ni mécanique, les ouvrants d'un objet et notamment d'un véhicule automobile. En particulier, on a développé des techniques d'accès sans clef qui permettent d'accéder à des ressources sans avoir à sortir une clef mécanique, ou équivalente, d'autorisation de l'accès.

Un tel système est très attractif par le confort qu'il apporte à l'usager et par les possibilités de gestion des accès par des moyens informatiques qu'il permet.

Dans l'application au verrouillage et au déverrouillage d'ouvrants comme ceux d'un véhicule automobile, ou d'un antivol de sécurité comme celui d'une colonne de direction, ou de l'arbre de sortie de la boîte de vitesses d'un véhicule, on a dans cette optique proposé des systèmes mécaniques utilisant des organes moteur de type électrique tels qu'un moteur électrique tournant ou un électro-aimant.

Quand le système de gestion des accès reconnaît le droit d'accès et une demande d'accès, un organe de commande produit un ordre d'actionnement qui excite l'organe moteur électrique. L'antivol et/ou le verrou change d'état en passant de l'état verrouillé à l'état déverrouillé.

Une séquence analogue inverse se produit pour la sortie et/ou l'activation de l'antivol.

Selon une conception connue, décrite et représentée dans le document FR-A-2.710.599 (non publié à la date de priorité du présent brevet), il a déjà été proposé un procédé de contrôle d'un antivol de véhicule automobile, notamment avec système d'accès par commande à distance, faisant notamment appel à un commutateur de commande de démarrage et d'alimentation électrique des accessoires du véhicule. Un autre état de la technique est constitué par le document US-A-3.735.833.

Selon le procédé, dans une phase de désactivation de l'antivol, on accède au véhicule, par exemple avec une télécommande, on manoeuvre un commutateur qui reproduit la manipulation des clefs mécaniques habituelles, on détecte une position déterminée du commutateur pour produire une interrogation d'identification de la demande de déverrouillage de l'antivol, on produit en réponse un ordre d'activation de positions successives du commutateur et un ordre de déverrouillage de l'antivol.

Dans une phase d'activation de l'antivol, on détecte une manoeuvre d'activation de l'antivol sur le commutateur, cette manoeuvre reproduisant les manipulations habituelles des clefs mécaniques, on active l'antivol, on désactive les positions successives du commutateur.

Pour la mise en oeuvre d'un tel procédé, il est fait appel à un antivol du type comportant :
- un commutateur d'antivol pour la commande du démarrage du moteur du véhicule et de l'alimentation de différents circuits électriques du véhicule ;
- un antivol motorisé comportant un moteur électrique d'entraînement J'un organe de blocage entre une position verrouillée et une position déverrouillée ; et
- une centrale d'antivol connectée aux éléments précédents pour mettre en oeuvre un procédé de contrôle de l'antivol ;
et du type dans lequel le commutateur d'antivol comporte:
- un interrupteur de clef pour détecter la simulation de l'introduction d'une clef dans le commutateur d'antivol ; et
- un interrupteur de commande à positions multiples pour commander en séquence l'alimentation de plusieurs circuits électriques du véhicule et du démarreur, comportant un contact mobile de commande relié à une polarité d'une source d'alimentation électrique, et une série de contacts fixes avec lesquels le contact mobile entre successivement en contact lors de la manoeuvre du commutateur en vue de provoquer le démarrage du véhicule, et parmi lesquels le dernier contact fixe est relié notamment au démarreur, l'interrupteur de commande ne pouvant être actionné qu'en présence d'une clef; et
- un dispositif d'inhibition de l'interrupteur de commande qui empêche la venue en contact du contact mobile de commande avec le contact fixe de démarreur tant que l'antivol n'est pas en position déverrouillée et qui, en réponse à un signal de libération provenant de la centrale d'antivol, autorise la venue en contact du contact mobile avec le contact fixe de démarrage.

Un tel antivol électrique doit conférer à l'usager la même sécurité qu'un antivol à commande classique mécanique par clef et doit notamment empêcher tout démarrage du véhicule tant que l'organe de blocage de l'antivol n'est pas dans la position déverrouillée.

De préférence, il doit également éviter toute possibilité d'activation de l'antivol vers sa position verrouillée tant que le véhicule n'est pas arrêté.

A cet effet, l'invention a pour but de proposer un nouvel agencement du circuit d'alimentation du moteur électrique de l'antivol motorisé.

Dans ce but, l'invention propose un antivol électrique perfectionné, notamment pour un véhicule automobile, du type comportant :
- un commutateur d'antivol pour la commande du démarrage du moteur du véhicule et de l'alimentation de différents circuits électriques du véhicule ;
- un antivol motorisé comportant un moteur électrique d'entraînement d'un organe de blocage entre une position verrouillée et une position déverrouillée ;
et du type dans lequel le commutateur d'antivol comporte :
- un interrupteur de clef pour détecter la simulation de l'introduction d'une clef dans le commutateur d'antivol ; et
- un interrupteur de commande à positions multiples pour commander en séquence l'alimentation de plusieurs circuits électriques du véhicule et du démarreur, comportant un contact mobile de commande relié à une polarité d'une source d'alimentation électrique, et une série de contacts fixes avec lesquels le contact mobile entre successivement en contact lors de la manoeuvre du commutateur en vue de provoquer le démarrage du véhicule,
caractérisé en ce que l'interrupteur de clef comporte un contact mobile relié à la source d'alimentation et qui est susceptible :
- de coopérer avec un premier contact fixe relié au moteur d'entraînement de l'antivol motorisé, en l'absence de clef et à travers un interrupteur de détection du verrouillage de l'antivol, lorsque l'antivol n'est pas en position verrouillée, et
- de coopérer avec un second contact fixe relié au moteur d'entraînement de l'antivol motorisé, en présence de clef et à travers un interrupteur de détection du déverrouillage de l'antivol, lorsque l'antivol n'est pas en position déverrouillée.

Selon d'autres caractéristiques de l'invention :
- l'interrupteur de détection du verrouillage de l'antivol comporte un contact mobile relié au premier contact fixe de l'interrupteur de clef et qui est susceptible de coopérer avec un premier contact fixe lorsque l'antivol est en position verrouillée, et de coopérer avec un second contact fixe relié au moteur d'entraînement de l'antivol motorisé, lorsque l'antivol n'est pas en position verrouillée ; et
- l'interrupteur de détection du déverrouillage de l'antivol comporte un contact mobile relié au second contact fixe de l'interrupteur de clef et qui est susceptible de coopérer avec un premier contact fixe lorsque l'antivol est en position déverrouillée, et de coopérer avec un second contact fixe, relié au moteur d'entraînement de l'antivol motorisé, lorsque l'antivol n'est pas en position déverrouillée ;
- l'antivol comporte une centrale d'antivol connectée au commutateur d'antivol et à l'antivol motorisé pour mettre en oeuvre un procédé de contrôle de l'antivol, caractérisé en ce que le second contact fixe de l'interrupteur de clef est relié en permanence à une entrée, de la centrale d'antivol, de détection d'un changement de position du contact mobile de l'interrupteur de clef ;
- le premier contact fixe de l'interrupteur de détection du verrouillage de l'antivol est relié en permanence à une entrée, de la centrale d'antivol, de détection de l'état verrouillé de l'antivol ; et
- le premier contact fixe de l'interrupteur de détection du déverrouillage de l'antivol est relié en permanence à une entrée de la centrale d'antivol, de détection de l'état déverrouillé de l'antivol ;
- le second contact fixe de l'interrupteur de détection de verrouillage de l'antivol et le second contact fixe de l'interrupteur de détection du déverrouillage sont reliés en permanence à une entrée, de la centrale d'antivol, de détection d'un changement d'état de l'antivol.

D'autres caractéristiques et avantages de l'invention apparaîtront à la lecture de la description détaillée qui va suivre pour la compréhension de laquelle on se reportera aux dessins annexés dans lesquels :
- La figure 1 est un schéma illustrant un principe de réalisation d'un antivol selon l'état de la technique;
- la figure 2 est un schéma qui illustre un mode de réalisation d'un antivol selon l'invention sur lequel l'antivol électrique est représenté à l'état verrouillé;
- la figure 3 est un schéma similaire à celui de la figure 2 sur lequel l'antivol électrique passe de l'état verrouillé à l'état déverrouillé ;
- la figure 4 est un schéma similaire à celui de la figure 3 sur lequel l'antivol électrique est représenté à l'état déverrouillé ; et
- la figure 5 est un schéma similaire à celui de la figure 2 sur lequel l'antivol passe de l'état déverrouillé à l'état verrouillé .

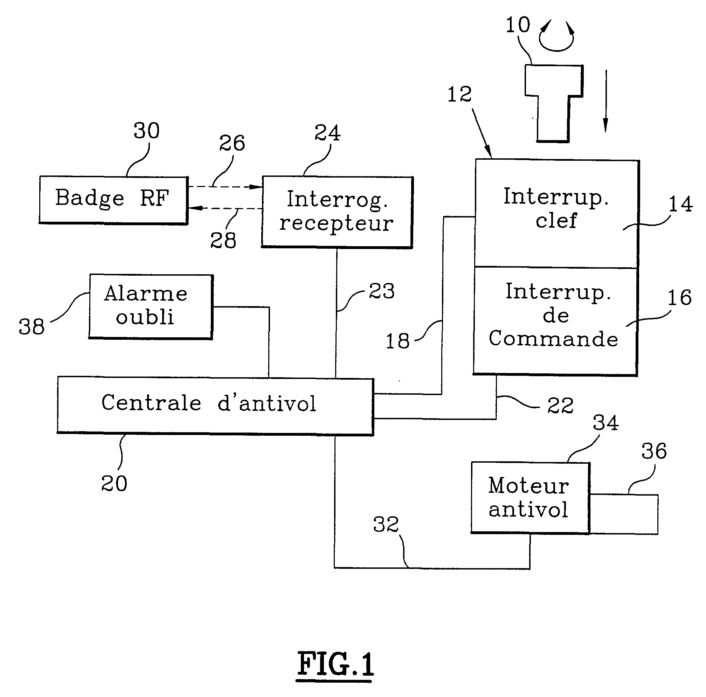

L'antivol 10 schématisé à la figure 1 comporte une clef, ou fausse, clef 10 qui est destinée à venir s'introduire dans le canon, ou faux canon, d'un commutateur d'antivol 12.

Le commutateur est prévu pour équiper le tableau de bord du véhicule et sa conception est de type sensiblement proche de celle du commutateur de démarrage d'un véhicule selon l'état de la technique.

L'utilisateur manoeuvre la clef de contact 10 ou un anneau d'allumage.

La clef de contact 10 est en fait une fausse clef en ce qu'elle n'agit pas nécessairement sur une serrure mécanique, bien qu'une telle clef réelle apporte un degré supplémentaire de sécurité en ajoutant un moyen de verrouillage ou de déverrouillage supplémentaire en chaîne avec la conception générale d'un antivol électrique.

Le commutateur d'antivol 12 comporte un interrupteur de clef 14 qui est destiné à détecter l'absence de la clef 10 ou la présence en position introduite de cette dernière.

Le commutateur 12 comporte également un interrupteur de commande à positions multiples 16 pour la commande du démarrage du moteur du véhicule et pour la commande de l'alimentation de différents circuits électriques du véhicule.

L'interrupteur de clef 14 est relié par une ligne 18 à une entrée d'une centrale d'antivol 20 tandis que l'interrupteur de commande 16 est relié par une ligne 22 à une autre entrée de la centrale d'antivol 20.

La centrale d'antivol comporte un circuit d'analyse qui est notamment capable de lire les positions qu'occupent les interrupteurs 14 et 16 du commutateur 12.

La centrale d'antivol comporte par exemple un microcontrôleur tel qu'un circuit INTEL 8051. Ce circuit contient un programme de lecture des ports d'entrée pour informer la centrale d'antivol des positions des différents interrupteurs du commutateur 12 comme cela sera expliqué par la suite.

Selon une conception connue, et par une autre entrée et une ligne 23, la centrale d'antivol 20 échange des signaux avec une station d'interrogation et de réception 24 qui échange par des lignes 26 et 28 des signaux avec, par exemple, un badge 30 d'accès sans clef au véhicule.

En fonction des échanges avec la centrale d'antivol 20, celle-ci produit sur une liaison 32 un signal de commande de la mise en marche, dans l'un ou l'autre sens, d'un moteur d'antivol 34 qui agit sur un organe 36 de blocage mécanique de la colonne de direction du véhicule, ou de l'arbre de sortie de la boîte de vitesses.

Par ailleurs, si l'utilisateur oublie le badge radiofréquence 30 à l'intérieur du véhicule ou s'il omet de manoeuvrer la clef 10 pour mettre en oeuvre une séquence d'activation de l'antivol alors qu'il laisse son badge 30 dans le véhicule, la centrale d'antivol 20 produit l'activation d'un moyen d'alarme d'oubli 38.

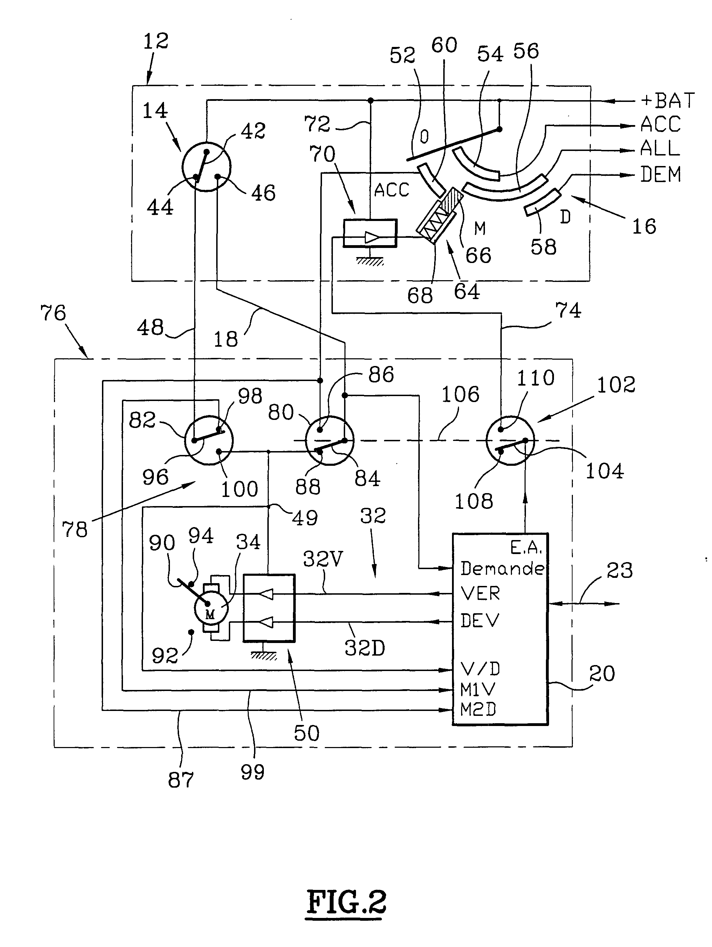

On décrira maintenant un premier mode de réalisation d'un antivol électrique selon l'invention en se reportant au schéma de la figure 2 sur laquelle des composants identiques ou similaires à ceux de la figure 1 sont désignés par les mêmes chiffres de référence.

L'interrupteur de clef 14 comporte un contact mobile basculant 42 qui est relié en permanence à la borne +BAT de la batterie du véhicule et dont l'extrémité libre coopère avec un contact fixe 44 en l'absence de clef, ou avec un contact fixe 46 lorsqu'une clef 10 est introduite dans le commutateur de commande 12.

Un bloc 50 d'alimentation électrique du moteur 34 reçoit des signaux de commande de verrouillage et de déverrouillage par des lignes 32V et 32D reliés à des ports de sortie VER, DEV de la centrale d'antivol 20.

Le contact fixe 46 de l'interrupteur de clef 14 est relié par la ligne 18 à un port d'entrée "Demande" de la centrale d'antivol 20 de manière que cette dernière puisse déclencher une séquence d'identification de la demande de déverrouillage de l'antivol ou de la demande de verrouillage de l'antivol.

L'interrupteur de commande à positions multiples 16 est un interrupteur du type rotatif qui comporte un contact mobile de commande 52 qui est relié en permanence à la borne + BAT de la batterie du véhicule.

Le contact mobile de commande 52 est susceptible d'occuper successivement plusieurs positions décalées angulairement les unes par rapport aux autres et qui sont repérées "0", "ACC", "M", et "D" sur les figures.

Dans ces positions successives d'arrêt, d'alimentation d'accessoires électriques, de marche, et de démarrage, le contact mobile rotatif de commande 52 est susceptible de coopérer avec une ou plusieurs pistes conductrices agencées en arc de cercle constituant les contacts fixes de l'interrupteur 16.

Lorsque le contact mobile 52 est dans la position ACC, il coopère avec une piste fixe 54 qui est reliée électriquement au circuit d'alimentation ACC des accessoires du véhicule.

Lorsque l'organe mobile de commande 52 est dans la position M, il est simultanément en contact avec la piste 54 et avec une piste conductrice 56 qui est reliée au circuit d'allumage ALL du moteur du véhicule.

Lorsque le contact mobile 52 est dans la position D, il est en contact avec la piste 56 ainsi qu'avec la piste conductrice 58.

La piste 58 est le contact fixe de démarreur DEM du moteur à combustion du véhicule (non représenté) qui est relié au démarreur d'une manière qui sera décrite plus en détail par la suite.

Lorsque le contact mobile de commande 52 est en contact avec le début de la piste constituant le contact fixe 54, provenant de la position d'arrêt "0", il vient simultanément en contact avec une piste en arc de cercle 60 qui constitue le contact fixe de déverrouillage et l'agencement de la piste 60 par rapport à la piste 54 est tel que le contact mobile 52 est simultanément en contact avec les deux pistes 54 et 60 sur une partie de sa course angulaire au cours de laquelle il parcourt la piste 54.

Cette partie de la course est délimitée par un dispositif d'inhibition 64 qui, dans ce mode de réalisation, est illustré sous la forme d'un électro-aimant.

L'électro-aimant 64 comporte un noyau plongeur 66 qui est sollicité élastiquement en permanence par un ressort dans sa position sortie illustrée sur la figure 2 dans laquelle il fait saillie à l'extérieur du boîtier 68 pour s'étendre, à la fin de la piste de déverrouillage 60, en regard du parcours du contact mobile de commande 52 afin d'empêcher tout parcours angulaire de ce dernier au-delà de la piste 60, en direction de la piste d'allumage 56 et de la piste de démarreur 58, tant que l'électro-aimant d'inhibition 64 n'a pas été alimenté électriquement pour provoquer le retrait du noyau ou plongeur mobile 66 de l'électro-aimant.

Du point de vue fonctionnel, et en considérant la rotation du contact mobile 52 (dans le sens anti-horaire en considérant la figure 2), le dispositif d'inhibition 64 est donc disposé en aval de la piste de déverrouillage 60 et en amont de la piste d'allumage 56 et de la piste de démarreur 58.

L'alimentation en énergie électrique de l'électro-aimant d'inhibition 64 est assurée par un bloc d'alimentation 70 qui est relié directement au pôle +BAT de la batterie par une ligne 72 et qui reçoit des signaux de commande de la libération du dispositif d'inhibition, c'est-à-dire d'alimentation de la bobine de l'électroaimant 64, par une ligne 74 qui est reliée à un port de sortie de la centrale d'antivol 20.

Tant que le bloc d'alimentation 70 n'a pas reçu d'ordre de la centrale d'antivol 20, et en partant de la position verrouillée illustrée sur la figure 2, il est impossible que le contact mobile de commande 52 atteigne les pistes 56 et 58.

On décrira maintenant plus en détail le module de blocage 76 entouré par une ligne en trait mixte à la partie inférieure de la figure 2.

Le module de blocage 76 comporte des moyens 78 de détection de l'état verrouillé ou déverrouillé de l'antivol qui délivrent un signal correspondant à la centrale d'antivol 20.

Dans le premier mode de réalisation illustré aux figures 2 à 5, les moyens de détection 78 sont constitués par deux interrupteurs 80, 82 de détection, chacun à deux positions.

L'interrupteur 80 de détection du déverrouillage de l'antivol comporte un élément de contact mobile basculant 84 qui est relié en permanence par la ligne 18 au contact fixe 46 de l'interrupteur de clef 14 et il est également relié en permanence à l'entrée "Demande" de la centrale d'antivol 20.

L'élément de contact mobile 84 est susceptible de coopérer avec un premier contact fixe 86, lorsque l'antivol est dans sa position déverrouillée, qui est relié par une ligne 87 à un port d'entrée de détection du déverrouillage M2D de la centrale d'antivol 20 et à la piste 60.

Dans la position verrouillée de l'antivol illustré sur la figure 2, le contact mobile 84 est en contact avec un second contact fixe 88 qui est relié à l'entrée 49 d'alimentation électrique du bloc d'alimentation 50 du moteur 34 et à un porte d'entrée V/D de la centrale d'antivol 20.

L'élément de contact mobile 84 de l'interrupteur de détection de déverrouillage 80 est lié en rotation au moteur 34 dont on a représenté de manière schématique sur les figures un organe mobile 90 qui lui est lié en rotation et qui est susceptible de venir coopérer avec une butée mécanique de verrouillage 94 et avec une butée mécanique de déverrouillage 92.

La conception de l'interrupteur de détection de déverrouillage 80 est telle que le contact mobile 84 vient coopérer avec le contact fixe 86 avant que l'élément 90 ne vienne coopérer avec la butée mécanique de déverrouillage 92.

L'interrupteur de détection de verrouillage 82 comporte un élément de contact mobile basculant 96 qui est relié en permanence par la ligne 48 au contact fixe 44 de l'interrupteur de clef 14. Dans la position verrouillée illustrée sur la figure 2, le contact mobile 96 coopère avec un contact fixe 98 qui est relié directement, par une ligne 99, à un port d'entrée de détection du verrouillage M1V de la centrale d'antivol 20.

L'élément de contact mobile 96 est également susceptible de coopérer avec un second contact fixe 100 qui est relié en permanence au port d'entrée V/D de la centrale d'antivol 20, à l'entrée d'alimentation 49 du bloc d'alimentation 50 du moteur 34, et au second contact fixe 88 de l'interrupteur de détection du déverrouillage 80.

L'antivol électrique comporte enfin un interrupteur d'inhibition 102 interposé dans la ligne 74 entre la centrale d'antivol 20 et le bloc 70 d'alimentation électrique de l'électro-aimant d'inhibition 64.

L'interrupteur 102 comporte un élément de contact mobile basculant 104 qui est lié mécaniquement en rotation à l'élément de contact mobile 84 de l'interrupteur de détection du déverrouillage 80.

Cette liaison mécanique est schématisée par une ligne en trait pointillé 106 sur les figures.

L'élément de contact mobile 104 est, lorsque l'antivol est dans sa position verrouillée, en contact avec un contact fixe neutre 108 et il est susceptible de venir établir le contact électrique avec un contact fixe 110 lorsque l'antivol est dans sa position déverrouillée, c'est-à-dire lorsque l'élément mobile 84 de l'interrupteur de détection de déverrouillage 80 atteint sa position de déverrouillage en contact avec le contact fixe 86.

On décrira maintenant le fonctionnement de l'antivol électrique illustré aux figures 2 à 5.

Dans la position verrouillée illustrée sur la figure 2, le moteur 34 est en contact avec la butée mécanique de verrouillage 94, le contact mobile 42 de l'interrupteur 14 est en contact avec le contact fixe 44 et l'organe mobile de commande 52 est dans sa position d'arrêt "O".

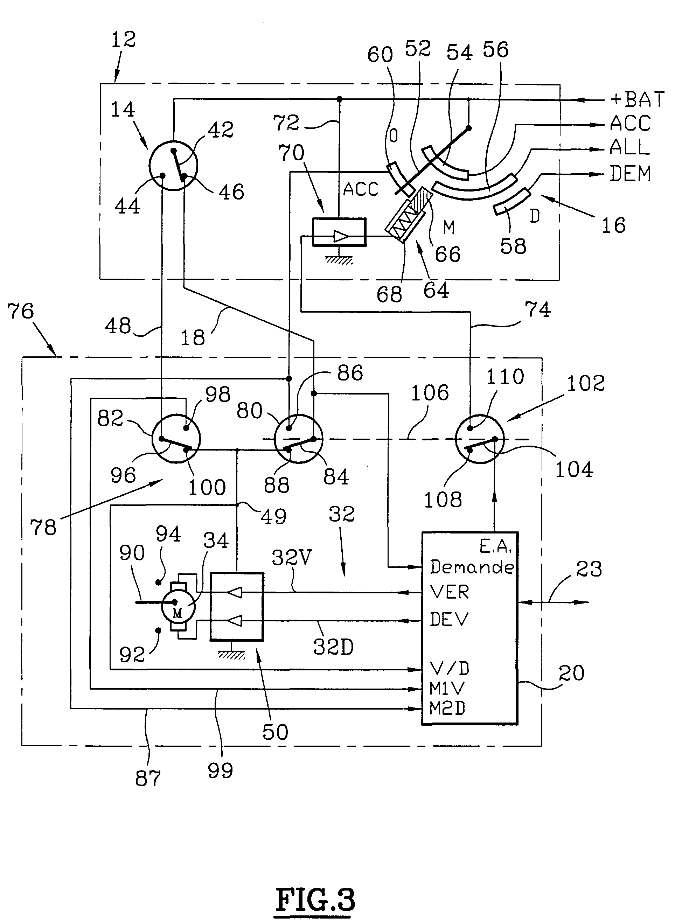

Lorsque le conducteur introduit la clef 10 dans le commutateur 12, il provoque d'abord le changement d'état de l'interrupteur de clef 14 qui passe de la position illustrée sur la figure 2 à la position illustrée sur la figure 3.

Dans cette nouvelle position, l'organe mobile de contact 42 est en contact avec le contact fixe 46 et il transmet par la ligne 18 un ordre de demande de déverrouillage au port d'entrée "Demande" de la centrale d'antivol 20.

Le changement d'état de l'interrupteur de clef 14 a également pour effet de permettre l'alimentation électrique du bloc d'alimentation 50 du moteur 34 par la ligne 18 et à travers l'interrupteur de détection du déverrouillage 80 dont le contact fixe 88 est relié à l'entrée d'alimentation 49.

Le conducteur fait ensuite pivoter l'interrupteur à contacts multiples 16 dont l'élément mobile de commande 52 peut pivoter jusqu'à sa position angulaire immédiatement adjacente ACC dans laquelle il est simultanément en contact avec les contacts fixes 54 et 60.

La centrale d'antivol 20 transmet, par son port de sortie VER, un ordre de commande du déverrouillage au bloc d'alimentation 50 qui provoque la rotation du moteur 34 jusqu'à une position intermédiaire illustrée sur la figure 3 dans laquelle l'interrupteur de détection du verrouillage 82 a déjà changé de position, en provoquant un changement d'état au port d'entrée M1V de la centrale d'antivol 20.

La rotation du moteur 34 se poursuit jusqu'à ce que l'antivol soit en position déverrouillée.

L'alimentation électrique du bloc 50 est maintenue jusqu'à la fin du déverrouillage par le contact 60 et l'élément mobile 84 en contact avec le plot fixe 88.

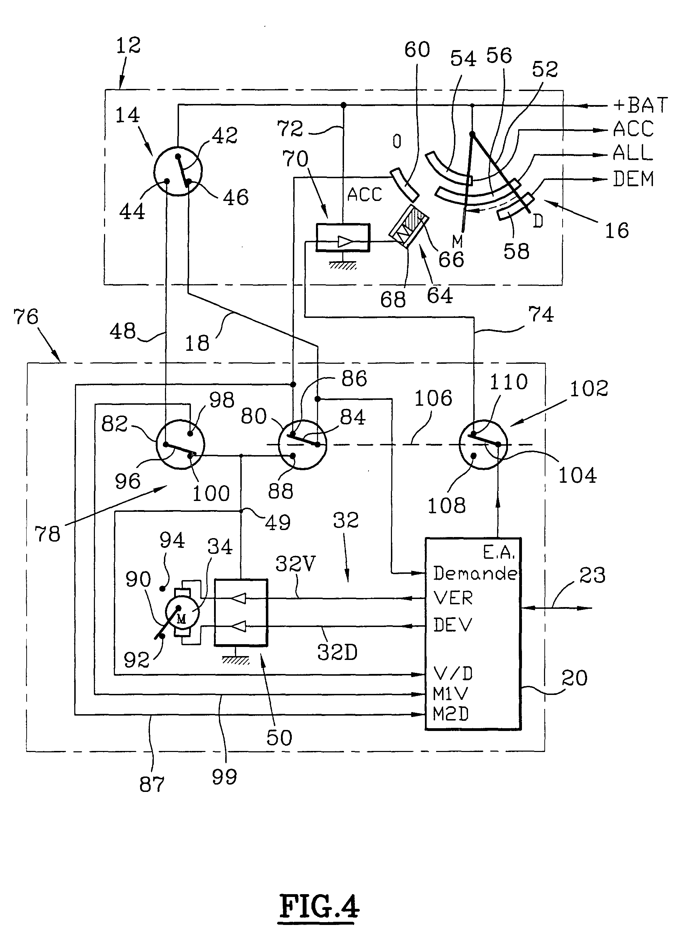

Au cours de cette fin de changement d'état de l'antivol, le moteur 34 atteint sa butée mécanique de déverrouillage 92 et l'interrupteur 80 de détection du déverrouillage atteint sa position illustrée sur la figure 4 et provoque simultanément le changement d'état de l'interrupteur d'inhibition 102.

Lorsque l'élément de contact mobile 84 de l'interrupteur de détection du déverrouillage 80 est en position déverrouillée, l'élément mobile 104 de l'interrupteur d'inhibition 102 a établi la ligne 74 entre la centrale d'antivol 20 et le bloc d'alimentation 70 de l'électro-aimant 64 pour permettre de transmettre un signal de libération à l'électro-aimant 64, signal provoquant le retrait du plongeur 66.

Il est alors possible au conducteur de poursuivre l'actionnement de l'interrupteur à positions multiples 16, notamment vers ses positions de marche M et de démarrage D afin de permettre la mise en route du moteur du véhicule, puis l'utilisation de ce dernier.

Dans la position normale de marche "M", le contact mobile 52 est simultanément en contact avec le contact fixe 54 alimentant les accessoires ACC et avec le contact fixe 56 alimentant le circuit d'allumage ALL.

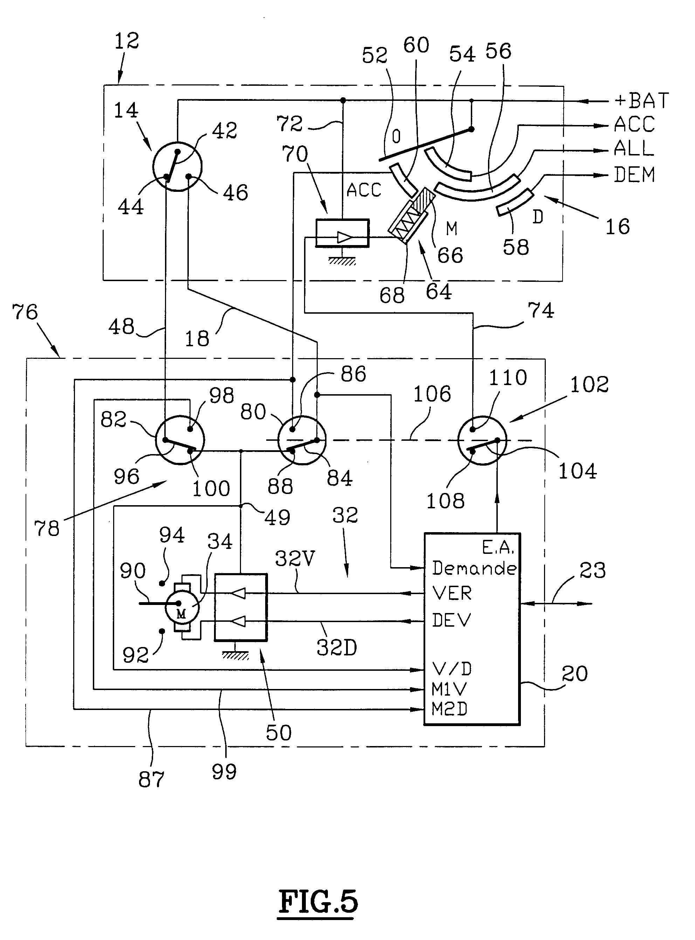

Lorsque le conducteur arrête le véhicule et désire procéder au verrouillage de l'antivol, il ramène d'abord, comme cela est illustré sur la figure 5, le contact mobile 52 de l'interrupteur à positions multiples 16 dans la position d'arrêt "0" dans laquelle il n'est plus en contact avec aucune des pistes fixes de contact 54 à 60.

A la fin de cette rotation, le conducteur retire la fausse clef 10, ce qui a pour effet de ramener le contact de clef 14 dans sa position illustrée aux figures 2 et 5 dans laquelle le contact mobile 42 relie directement la borne +BAT au contact fixe 44 et à la ligne 48.

Le retour du contact clef de sa position active illustrée à la figure 4 à sa position de repos illustrée à la figure 5 a également pour effet d'alimenter en énergie électrique l'entrée 49 du bloc d'alimentation 50, de transmettre un signal de demande de verrouillage au port d'entrée "Demande" de la centrale d'antivol 20 qui a vu son état changer et de transmettre un signal au port d'entrée V/D.

La centrale d'antivol 20 transmet alors par la ligne 32D un ordre de verrouillage au bloc d'alimentation 50 et au moteur 34, ce dernier quittant la position de déverrouillage contre la butée mécanique de déverrouillage 92 pour aller jusqu'à la position de verrouillage déterminée par la butée mécanique de verrouillage 94, les différents composants retrouvant alors leurs positions respectives illustrées à la figure 2.

En effet, au cours de la rotation vers la position de verrouillage, l'interrupteur de détection de déverrouillage 80 change d'état et simultanément l'interrupteur d'inhibition 102 change d'état pour interrompre à nouveau la liaison entre la centrale d'antivol 20 et le bloc d'alimentation 70 de l'électro-aimant 64 provoquant à nouveau la sortie du plongeur 66 de ce dernier qui inhibe alors à nouveau l'accès de l'élément de contact mobile de commande 52 aux pistes 56 et 58.

On comprend aisément que tant que le conducteur n'a pas retiré la fausse clef, c'est-à-dire qu'il n'a pas provoqué le changement d'état de l'interrupteur de clef 14, à partir de la position que celui-ci occupe sur la figure 4, qu'il est impossible que le bloc d'alimentation 50, sous l'ordre de la centrale d'antivol 20, provoque le verrouillage de l'antivol dans la mesure où le bloc 50 n'est pas alimenté électriquement.

L'invention n'est pas limitée au mode de réalisation qui vient d'être décrit.

L'invention n'est notamment pas limitée à la réalisation d'un interrupteur de clef 14 sous la forme d'un interrupteur électrique commandé par une fausse clef, cette fonction pouvant être remplacée par tout autre type d'interrupteur électrique commandé directement ou indirectement par le conducteur.

De même, l'interrupteur 16 à positions multiples n'est pas nécessairement un interrupteur rotatif.

## Revendications

1. Antivol électrique perfectionné (10), notamment pour un véhicule automobile, du type comportant :
- un commutateur d'antivol (12) pour la commande du démarrage (DEM) du moteur du véhicule et de l'alimentation de différents circuits électriques du véhicule (ACC, ALL) ;
- un antivol motorisé comportant un moteur électrique (34) d'entraînement d'un organe de blocage (36) entre une position verrouillée et une position déverrouillée ;
et du type dans lequel le commutateur d'antivol (12) comporte :
- un interrupteur de clef (14) pour détecter la simulation de l'introduction d'une clef (10) dans le commutateur d'antivol (12) ; et
- un interrupteur de commande (16) à positions multiples pour commander en séquence l'alimentation de plusieurs circuits électriques du véhicule et du démarreur (DEM), comportant un contact mobile de commande (52) relié à une polarité (+BAT) d'une source d'alimentation électrique, et une série de contacts fixes (54, 56, 58) avec lesquels le contact mobile (52) entre successivement en contact lors de la manoeuvre du commutateur (12) en vue de provoquer le démarrage du véhicule,
caractérisé en ce que l'interrupteur de clef (14) comporte un contact mobile (42) relié à la source d'alimentation (+BAT) et qui est susceptible :
- de coopérer avec un premier contact fixe (44) relié au moteur d'entraînement de l'antivol motorisé (34, 50), en l'absence de clef (10) et à travers un interrupteur (82) de détection du verrouillage de l'antivol, lorsque l'antivol n'est pas en position verrouillée, et
- de coopérer avec un second contact fixe (46) relié au moteur d'entraînement de l'antivol motorisé (34), en présence de clef (10) et à travers un interrupteur (80) de détection du déverrouillage de l'antivol, lorsque l'antivol n'est pas en position déverrouillée.

2. Antivol électrique selon la revendication 1, caractérisé en ce que :
- l'interrupteur (82) de détection du verrouillage de l'antivol comporte un contact mobile (96) relié au premier contact fixe (44) de l'interrupteur de clef (14) et qui est susceptible de coopérer avec un premier contact fixe (98) lorsque l'antivol est en position verrouillée, et de coopérer avec un second contact fixe (100) relié au moteur d'entraînement (34) de l'antivol motorisé, lorsque l'antivol n'est pas en position verrouillée ; et en ce que
- l'interrupteur (80) de détection du déverrouillage de l'antivol comporte un contact mobile (84) relié au second contact fixe (46) de l'interrupteur de clef (14) et qui est susceptible de coopérer avec un premier contact fixe (86) lorsque l'antivol est en position déverrouillée, et de coopérer avec un second contact fixe (88), relié au moteur d'entraînement (34) de l'antivol motorisé, lorsque l'antivol n'est pas en position déverrouillée.

3. Antivol selon l'une des revendications 1 ou 2, caractérisé en ce qu'il comporte une centrale d'antivol (20) connectée au commutateur d'antivol (12) et à l'antivol motorisé, caractérisé en ce que le second contact fixe (46) de l'interrupteur de clef (14) est relié en permanence à une entrée (Demande), de la centrale d'antivol (20), de détection d'un changement de position du contact mobile (42) de l'interrupteur de clef (14) ;

4. Antivol selon la revendication 3 prise en combinaison avec la revendication 2, caractérisé en ce que :
- le premier contact fixe (98) de l'interrupteur (82) de détection du verrouillage de l'antivol est relié en permanence à une entrée (M1V), de la centrale d'antivol, (20) de détection de l'état verrouillé de l'antivol ; et en ce que
- le premier contact fixe (86) de l'interrupteur (80) de détection du déverrouillage de l'antivol est relié en permanence à une entrée (M2D), de la centrale d'antivol (20), de détection de l'état déverrouillé de l'antivol.

5. Antivol selon l'une des revendications 3 ou 4, caractérisé en ce que le second contact fixe (100) de l'interrupteur (82) de détection de verrouillage de l'antivol et le second contact fixe (88) de l'interrupteur (80) de détection du déverrouillage sont reliés en permanence à une entrée (V/D), de la centrale d'antivol (20), de détection d'un changement d'état de l'antivol.

## Patentansprüche

1. Verbesserte elektrische Diebstahlsicherung (10), insbesondere für ein Kraftfahrzeug, mit
- einem Diebstahlschutzschalter (12) zur Steuerung des Startvorganges (+DEM) des Fahrzeugmotors und zur Versorgung der unterschiedlichen elektrischen Stromkreise des Fahrzeuges (+ACC, +ALL),
- einer motorbetätigten Diebstahlsicherung mit einem Elektromotor (34) für den Antrieb eines Sperrelementes (36) zwischen einer verriegelten Stellung und einer entriegelten Stellung,
- wobei der Diebstahlschutzschalter (12):
- einen Schlüsselschalter (14) zum Erkennen der Simulation des Einführens eines Schlüssels (10) in den Diebstahlschutzschalter (12); und
- einen Mehrstellungssteuerschalter (16) für die sequentielle Steuerung der Versorgung mehrerer elektrischer Stromkreise des Fahrzeuges und des Starters (+DEM) umfaßt, wobei der Mehrstellungssteuerschalter einen beweglichen Steuerkontakt (52), der mit einer Polarität (+BAT) einer Stromquelle verbunden ist, und eine Reihe von feststehenden Kontakten (54, 56, 58) enthält, mit denen der bewegliche Kontakt (52) bei einer Betätigung des Schalters (12) nacheinander in Berührung kommt, um das Fahrzeug zu starten,
- dadurch gekennzeichnet, daß der Schlüsselschalter (14) einen beweglichen Kontakt (42) umfaßt, der mit der Stromquelle (+BAT) verbunden ist und der:
- bei Abwesenheit des Schlüssels (10) mit einem ersten feststehenden Kontakt (44) zusammenwirkt, welcher mit dem Antriebsmotor (34, 50) der motorbetätigten Diebstahlsicherung über einen Schalter (82) zur Ermittlung der Verriegelung der Diebstahlsicherung verbunden ist, wenn sich die Diebstahlsicherung nicht in der verriegelten Stellung befindet, und
- bei Anwesenheit des Schlüssels (10) mit einem zweiten feststehenden Kontakt (46) zusammenwirkt, welcher mit dem Antriebsmotor (34) der motorbetätigten Diebstahlsicherung über einen Schalter (80) zur Ermittlung der Entriegelung der Diebstahlsicherung verbunden ist, wenn sich die Diebstahlsicherung nicht in der entriegelten Stellung befindet.

2. Elektrische Diebstahlsicherung nach Anspruch 1, dadurch gekennzeichnet, daß
- der Schalter (82) zur Ermittlung der Verriegelung der Diebstahlsicherung einen beweglichen Kontakt (96) umfaßt, der mit dem ersten feststehenden Kontakt (44) des Schlüsselschalters (14) verbunden ist und der mit einem ersten feststehenden Kontakt (98) zusammenwirkt, wenn sich die Diebstahlsicherung in der verriegelten Stellung befindet, und mit einem zweiten feststehenden Kontakt (100), der mit dem Antriebsmotor (34) der motorbetätigten Diebstahlsicherung verbunden ist, zusammenwirkt, wenn sich die Diebstahlsicherung nicht in der verriegelten Stellung befindet; und daß
- der Schalter (80) zur Ermittlung der Entriegelung der Diebstahlsicherung einen beweglichen Kontakt (84) umfaßt, der mit dem zweiten feststehenden Kontakt (46) des Schlüsselschalters (14) verbunden ist und der mit einem ersten feststehenden Kontakt (86) zusammenwirkt, wenn sich die Diebstahlsicherung in der entriegelten Stellung befindet, und mit einem zweiten feststehenden Kontakt (88), der mit dem Antriebsmotor (34) der motorbetätigten Diebstahlsicherung verbunden ist, zusammenwirkt, wenn sich die Diebstahlsicherung nicht in der entriegelten Stellung befindet.

3. Elektrische Diebstahlsicherung nach einem der Ansprüche 1 oder 2, dadurch gekennzeichnet, daß die Diebstahlsicherung eine Diebstahlschutzsteuerung (20) umfaßt, die mit dem Diebstahlschutzschalter (12) und mit der motorisierten Diebstahlsicherung verbunden ist, dadurch gekennzeichnet, daß der zweite feststehende Kontakt (46) des Schlüsselschalters (14) ständig mit einem Eingang (ABFRAGE) der Diebstahlschutzsteuerung (20) verbunden ist, um eine Änderung der Stellung des beweglichen Kontaktes (42) des Schlüsselschalters (14) zu ermittelt.

4. Elektrische Diebstahlsicherung nach Anspruch 3 in Kombination mit Anspruch 2, dadurch gekennzeichnet, daß
- der erste feststehende Kontakt (98) des Schalters (82) zur Ermittlung der Verriegelung der Diebstahlsicherung ständig mit einem Eingang (M1V) der Diebstahlschutzsteuerung (20) verbunden ist, um den Verriegelungszustand der Diebstahlsicherung zu ermitteln; und daß
- der erste feststehende Kontakt (86) des Schalters (80) zur Ermittlung der Entriegelung der Diebstahlsicherung ständig mit einem Eingang (M2D) der Diebstahlschutzsteuerung (20) verbunden ist, um den Entriegelungszustand der Diebstahlsicherung zu ermitteln.

5. Elektrische Diebstahlsicherung nach einem der Ansprüche 3 oder 4, dadurch gekennzeichnet, daß der zweite feststehende Kontakt (100) des Schalters (82) zur Ermittlung der Verriegelung der Diebstahlsicherung und der zweite feststehende Kontakt (88) des Schalters (80) zur Ermittlung der Entriegelung der Diebstahlsicherung ständig mit einem Eingang (V/D) der Diebstahlschutzsteuerung (20) verbunden sind, um eine Zustandsänderung der Diebstahlsicherung zu ermitteln.

## Claims

1. An improved anti-theft device (10), especially for a motor vehicle, of the type comprising:
- an anti-theft switch (12) for controlling starting (DEM) of the engine of the vehicle and for supplying power to various electrical circuits of the vehicle (ACC, ALL);
- a motorised anti-theft unit, including an electric motor (34) for driving a stop member (36) between a locked position and an unlocked position;
and of the type in which the anti-theft switch (12) comprises:
- a key interruptor (14) for detecting simulated introduction of a key (10) into the anti-theft switch (12); and
- a multi-position control interruptor (16) for controlling the supply of power sequentially to a plurality of electrical circuits of the vehicle and to the starter (DEM), and including a moving control contact (52) connected to one polarity (+BAT) of an electrical power source, and a set of fixed contacts (54, 56, 58) with which the moving control contact (52) enters into contact successively during operation of the switch (12), whereby to cause the engine of the vehicle to start,
characterised in that the key interruptor (14) has a moving contact (42) connected to the power source (+BAT), and which is arranged to:
- cooperate with a first fixed contact (44) connected to the drive motor of the anti-theft unit (34, 50) in the absence of a key (10), and through an interruptor (82) for detecting locking of the anti-theft unit when the anti-theft unit is not in its locked position, and
- cooperate with a second fixed contact (46) connected to the drive motor of the anti-theft unit (34) in the presence of a key (10), and through an interruptor (80) for detecting the unlocking of the anti-theft unit when the anti-theft unit is not in its unlocked position.

2. An electrical anti-theft device according to Claim 1, characterised in that:
- the interruptor (2) for detecting unlocking of the anti-theft unit has a moving contact (96) which is connected to the first fixed contact (44) of the key interruptor (14), and which is arranged to cooperate with a first fixed contact (9) when the anti-theft unit is in its locked position, and to cooperate with a second fixed contact (100) connected to the drive motor (34) of the anti-theft unit when the anti-theft unit is not in its locked position; and in that
- the interruptor (80) for detecting unlocking of the anti-theft unit has a moving contact (84) connected to the second fixed contact (46) of the key interruptor (14), and which is arranged to cooperate with a first fixed contact (86) when the anti-theft unit is in its unlocked position, and to cooperate with a second fixed contact (88),connected to the drive motor (34) of the motorised anti-theft unit, when the anti-theft unit is not in its unlocked position.

3. An anti-theft device according to Claim 1 or Claim 2, characterised in that it includes a central control circuit (20) connected to the anti-theft switch (12) and to the motorised anti-theft unit, and characterised in that the second fixed contact (46) of the key interruptor (14) is permanently connected to an input (DEMAND) of the central control circuit (20) for detecting a change in the position of the moving contact (42) of the key interruptor (14).

4. An anti-theft device according to Claim 3 taken in combination with Claim 2, characterised in that:
- the first fixed contact (2) for detecting locking of the anti-theft unit is permanently connected to an input (M1V) of the central control circuit (20) for detecting the locked state of the anti-theft unit; and in that
- the first fixed contact (86) of the interruptor (80) for detecting unlocking of the anti-theft unit is permanently connected to an input (M2D) of the central control circuit (20), for detecting the unlocked state of the anti-theft unit.

5. An anti-theft device according to Claim 3 or Claim 4, characterised in that the second fixed contact (100) of the interruptor (82) for detecting locking of the anti-theft unit and the second fixed contact (88) of the interruptor (80) for detecting unlocking, are permanently connected to an input (V/D) of the central control circuit (20) for detecting a change of state of the anti-theft unit.
